# FASCICULE DE BREVET EUROPEEN

(11) **EP 3 044 018 B1**
(45) Date de publication et mention de la délivrance du brevet: **12.07.2017**
(21) Numéro de dépôt: 14758520.2
(22) Date de dépôt: 28.08.2014
(51) Int. Cl.: B60H 1/00

(54) **DISPOSITIF DE CONDITIONNEMENT D'AIR DE VÉHICULE AUTOMOBILE DE TYPE BIZONE**
ZWEI-ZONEN-KLIMAANLAGE FÜR KRAFTFAHRZEUG
MOTOR VEHICLE AIR-CONDITIONING DEVICE OF THE DUAL ZONE TYPE

(30) Priorité: 09.09.2013 FR 1302110
(43) Date de publication de la demande: 20.07.2016
(73) Titulaire: Valeo Systèmes Thermiques, 78320 Le Mesnil-Saint-Denis (FR)
(72) Inventeur: PIERRES, Philippe, 78322 Le Mesnil Saint-Denis cédex (FR); LECHAT, Yvan, 78322 Le Mesnil Saint-Dennis cédex (FR)
(74) Mandataire: Metz, Gaëlle
(86) Numéro de dépôt international: PCT/EP2014/068291
(87) Numéro de publication internationale: WO 2015/032687

(56) Documents cités:
- EP-A1- 2 489 533
- EP-A2- 1 075 973
- WO-A1-2005/000610
- WO-A1-2013/092454
- DE-A1- 19 756 166

## Description

L'invention concerne un dispositif de conditionnement d'air de véhicule automobile comprenant des moyens pour chauffer, ventiler et rafraîchir l'air de l'habitacle, afin notamment de régulier la température de cet habitacle et de désembuer ses vitres.

### ARRIERE PLAN DE L'INVENTION

Un tel dispositif comprend un carter renfermant un radiateur et un évaporateur ainsi qu'un ventilateur, et il comporte plusieurs entrées d'air et plusieurs sorties d'air. Ce carter renferme des canalisations internes et des volets et obturateurs pour réguler la température de l'air traité conformément à une configuration choisie par l'utilisateur.

Lorsqu'il est installé dans sa position de service, ce dispositif est adossé à la face intérieure du tablier avant du véhicule, et il comporte une entrée d'air par laquelle il reçoit de l'air extérieur et/ou de l'air intérieur à recycler.

L'air admis dans le carter qui est de l'air extérieur à l'habitacle et/ou de l'air intérieur est d'abord acheminé vers le système de ventilation, avant de traverser le l'évaporateur et/ou le radiateur pour être ensuite distribué dans l'habitacle par plusieurs sorties situées en partie arrière du carter.

Il est avantageux de concevoir un dispositif de ce type pour qu'il soit installé en partie centrale de la planche de bord pour distribuer de l'air vers toutes les régions de l'habitacle : le dispositif peut ainsi équiper indifféremment un véhicule à conduite à droite ou à conduite à gauche.

Un tel dispositif comporte ainsi typiquement deux sorties supérieures pour distribuer de l'air vers la face intérieure du pare-brise et vers le haut de l'habitacle, ainsi qu'une sortie gauche et une sortie droite pour ventiler l'air traité vers la place conducteur et vers la place passager, et une sortie inférieure orientée vers le bas de l'habitacle.

Selon une évolution récente, on attend de tels dispositifs qu'ils soient bizone, c'est-à-dire qu'ils soient capables de conditionner de l'air à deux températures différentes pour la partie droite et pour la partie gauche de l'habitacle. Ceci tend à multiplier la quantité de composants renfermés dans le carter, et à accroître son volume. Un dispositif de ce type est connu du document EP 1 075 973 A2, qui constitue l'art antérieur le plus proche.

### OBJET DE L'INVENTION

Le but de l'invention est de proposer un dispositif de conditionnement d'air pour véhicule automobile qui soit bizone tout en ayant un encombrement réduit.

### RESUME DE L'INVENTION

A cet effet, l'invention a pour objet un dispositif de conditionnement d'air destiné à équiper un habitacle de véhicule automobile comportant un tablier transversal avant en étant monté selon une position de service dans laquelle il est adossé à une région centrale de ce tablier, ce dispositif comportant un carter ayant au moins une entrée d'air située en partie haute de ce carter installé en position de service, ce carter renfermant un ventilateur centrifuge à tambour pour aspirer de l'air admis par l'entrée d'air et le refouler par une sortie d'air, dans lequel le carter délimite autour du tambour une volute collectant l'air centrifugé par ce tambour pour le diriger vers une partie inférieure du carter dans laquelle est logé un radiateur et/ou un évaporateur, ce carter renfermant dans sa partie inférieure en position de service un évaporateur et/ou un radiateur, ainsi qu'un volet de mixage avant et un volet de mixage arrière agencés pour établir deux flux d'air ayant des températures différentes, ces deux flux d'air remontant dans une colonne de distribution du dispositif pour être distribués vers une région gauche et vers une région droite de l'habitacle, ce dispositif comportant une paroi de séparation s'étendant dans la colonne, cette paroi ayant une forme gauche se rapprochant d'un quart de tour de torsade, comportant une portion inférieure s'étendant au dessus du radiateur et de l'évaporateur en étant inscrite dans un plan médian transversal séparant la colonne en une moitié avant et une moitié arrière lorsque le dispositif est dans sa position de service, de manière à constituer un flux d'air avant et un flux d'air arrière, et une portion supérieure terminée par un bord supérieur longitudinal s'étendant selon un plan médian longitudinal qui sépare la colonne en une première moitié latérale et une deuxième moitié latérale lorsque le dispositif est en service, de manière à canaliser le flux d'air avant vers l'une des moitiés latérales de la colonne, et le flux d'air arrière vers l'autre moitié latérale de la colonne.

L'invention concerne également un dispositif ainsi défini, dans lequel la paroi de séparation comporte deux bords inférieurs transversaux inscrits dans le plan médian transversal, ainsi que deux bords supérieurs transversaux raccordant chacun une extrémité du bord supérieur longitudinal à un bord inférieur transversal en longeant respectivement la paroi avant et la paroi arrière de la colonne.

### BREVE DESCRIPTION DES FIGURES

La figure 1 est une vue en perspective montrant l'avant du dispositif selon l'invention équipé de son organe d'admission et d'accouplement ;
La figure 2 est une vue en perspective montrant l'avant du dispositif selon l'invention dépourvu de son organe d'admission et d'accouplement ;
La figure 3 est une vue en perspective montrant l'organe d'admission et d'accouplement représenté seul ;
La figure 4 est une vue arrière du dispositif selon l'invention dans un plan de coupe transversale ;
La figure 5 est une vue en perspective montrant l'arrière du dispositif selon l'invention ;
La figure 6 est une autre vue arrière du dispositif selon l'invention dans un plan de coupe transversale montrant sa paroi de séparation interne de forme gauche ;
La figure 7 est une vue de la paroi de séparation interne de forme gauche représentée seule.

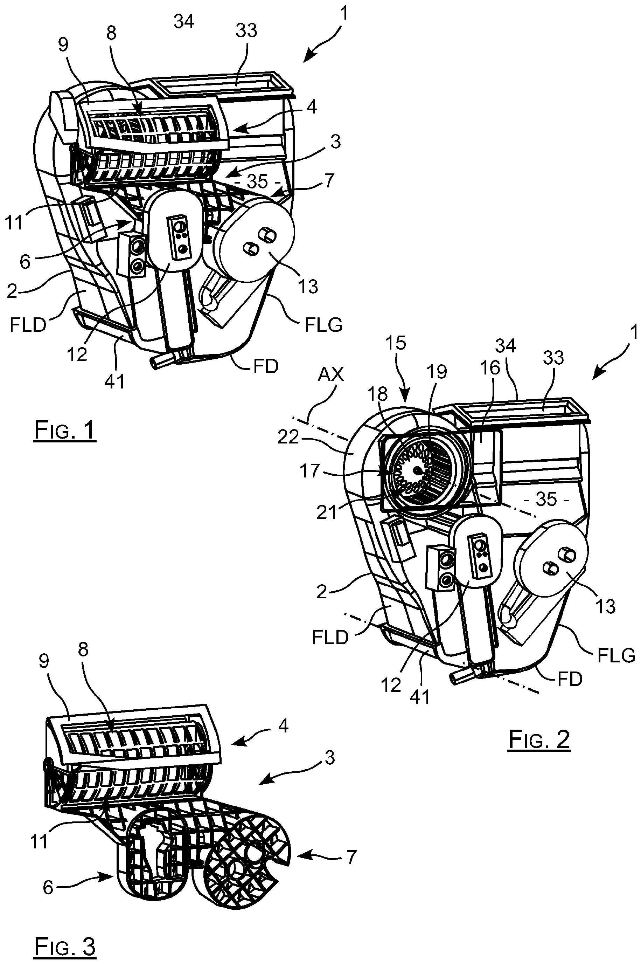

Le dispositif de conditionnement d'air qui apparaît dans la figure 1 en y étant repéré par 1 comporte un carter 2 formant enveloppe, constitué par exemple de deux coques en matière plastique assemblées l'une à l'autre.

Lorsque le dispositif est en position de service, c'est-à-dire lorsqu'il est installé dans le véhicule qu'il équipe, la partie avant de son carter 2 qui apparaît clairement dans la figure 2 est adossée à la région centrale de la face intérieure du tablier avant du véhicule.

Dans la suite, les régions et orientations, à savoir haut, bas, supérieur, inférieur, gauche, droite, avant, arrière et autres, des parties et/ou composants du dispositif selon l'invention sont données vis-à-vis de sa position de service lorsqu'il est installé dans un véhicule.

La partie avant de ce carter 2 est équipée d'un organe d'admission d'air et d'accouplement, repéré par 3 et représenté seul dans la figure 3, et qui comporte une bouche d'admission d'air 4 dans sa partie supérieure, et deux brides 6 et 7 de positionnement et d'accouplement du dispositif 1 au tablier du véhicule, ces brides étant situées sous la bouche d'admission 4.

La bouche d'admission 4 comporte une moitié supérieure 8 entourée par un encadrement 9 et qui est destinée à être plaquée contre une ouverture correspondante du tablier du véhicule pour collecter de l'air extérieur à l'habitacle afin de le conditionner. Elle comporte aussi une moitié inférieure 11 pour collecter de l'air intérieur longeant la face interne du tablier. L'encadrement 9 porte avantageusement un joint en mousse ou analogue par lequel il vient se plaquer sur le pourtour de l'ouverture du tablier de manière étanche. Un volet de mixage, non visible dans les figures et qui s'étend à l'intérieur de la bouche 4, permet d'ajuster la proportion d'air intérieur et d'air extérieur admis dans le carter.

La première bride 6, située à gauche sur les figures 1 et 3, s'accouple avec une platine correspondante 12 qui équipe le tablier du véhicule, pour connecter le dispositif de conditionnement à un circuit de chauffage du véhicule, dans lequel circule un liquide chaud. De manière analogue, la seconde bride 7 s'accouple avec une autre platine 13 du tablier du véhicule, pour connecter le dispositif 1 à un circuit de climatisation du véhicule dans lequel circule un fluide froid.

Les éléments de connexion au circuit chaud qui sont rigidement solidaires du carter 2 sont emboîtés dans la première bride 6, et les éléments de connexion au circuit froid, également rigidement solidaires du corps du carter 2, sont emboîtés dans la seconde bride 7.

L'organe d'admission et d'accouplement 3 est ainsi une pièce unique rapportée à la partie avant du carter et qui comporte conjointement la bouche d'admission permettant de collecter de l'air extérieur et de l'air à recycler, ainsi que les deux brides d'accostage avec le tablier et d'accouplement au circuit de chauffage et au circuit de climatisation.

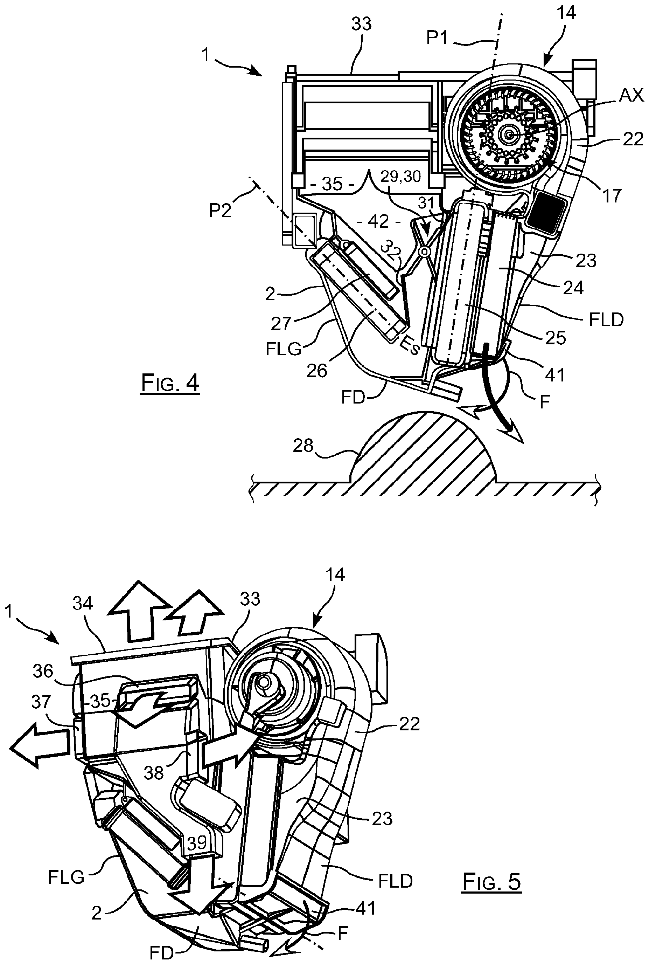

La partie supérieure du dispositif 1 comporte deux sorties hautes, l'une située du côté arrière du dispositif pour ventiler de l'air vers la partie haute de l'habitacle, et l'autre située vers l'avant du dispositif pour ventiler de l'air vers la face interne du pare-brise afin notamment de le désembuer. Comme on l'aura compris, la partie arrière du dispositif, qui est visible notamment à la figure 5, est celle qui est du côté de l'habitacle lorsque le dispositif est installé dans sa position de service.

Comme on l'aura compris, le dispositif est destiné à être installé dans un véhicule en ayant la même orientation verticale que dans les figures, son entrée d'air 16 et sa sortie haute étant situées vers le haut, au-dessus du reste du carter 2 qui renferme les échangeurs de chaleur du dispositif.

Le dispositif de conditionnement d'air selon l'invention est équipé d'un ventilateur centrifuge à volute 14 monté à l'intérieur du carter 2 de telle manière que sa zone d'aspiration coïncide avec l'entrée d'air 16 du carter 2. Cette entrée d'air est située dans la région supérieure de la partie avant du carter 2, et elle est couverte par la bouche d'admission 4 lorsque l'organe d'admission et d'accouplement 3 est en place sur le carter 2.

Ce ventilateur 14 comporte un tambour 17 entraîné en rotation autour d'un axe AX, ce tambour 17 comportant un fond 18 sensiblement plan portant un flanc cylindrique 19 formé d'aubes, et une face d'aspiration 21 correspondant à la face avant du tambour qui est ouverte. Lorsque le tambour 17 tourne, l'air est admis le long de l'axe AX par la face d'aspiration 21 pour être expulsé de façon centrifuge à travers les aubes constituant le flanc cylindrique 19.

Le carter 2 délimite autour du tambour 17 une forme de volute 22 collectant l'air centrifugé par le tambour pour le diriger vers la région inférieure du carter 2 afin qu'il y soit conditionné en traversant les échangeurs de chaleur que renferme ce carter.

Comme visible notamment dans la figure 2, le ventilateur 14 est monté dans le carter 2 de telle manière que la face d'aspiration 21 de son tambour 17 est directement au niveau de l'entrée d'air 16 du carter. Autrement dit, la zone d'aspiration du ventilateur 14 est sensiblement confondue avec l'entrée d'air 16 du carter 2, qui est elle-même accolée à l'ouverture correspondante du tablier lorsque le dispositif est dans sa position de service.

Dans l'exemple de la figure, le ventilateur 14 est ainsi positionné et orienté pour que son axe AX s'étende selon la direction longitudinale du véhicule, car l'entrée d'air 16 du carter 2 a son contour qui s'étend dans un plan transversal par rapport au véhicule lorsque l'ensemble est en place.

Il est également possible de prévoir l'entrée d'air au niveau de la face supérieure du carter, ce qui conduit alors à placer le ventilateur dans le carter face à cette entrée d'air, l'axe de rotation du ventilateur étant alors orienté verticalement lorsque le dispositif est dans sa position de service.

L'air admis à travers le tablier par la moitié supérieure 8 de la bouche d'admission 4 arrive ainsi directement dans la zone d'aspiration 21 du ventilateur, pour être immédiatement aspiré, ce qui réduit significativement les pertes de charge et l'encombrement de la région du carter dédiée à la ventilation.

Ainsi, et comme visible notamment dans les figures 1 et 2, le dispositif de conditionnement d'air 1 a une épaisseur faible dans sa partie supérieure du fait que cette épaisseur est de l'ordre de la profondeur du tambour 17 du ventilateur 14.

L'air centrifugé par le tambour 17 du ventilateur 14 est collecté par la volute 22 qui l'entoure, pour être ensuite dirigé dans un divergeant 23, c'est-à-dire une conduite s'évasant. Comme visible dans la figure 4, ce divergeant 23 prolonge la volute 22 le long du flanc latéral inférieur droit FLD du carter 2. Le flanc latéral droit FLD est celui qui est situé du côté droit du véhicule lorsque le dispositif est installé dans sa position de service.

Ce divergeant 23 aboutit dans la partie inférieure du carter 2 qui renferme un premier ensemble incluant un filtre 24 et un évaporateur 25 pour refroidir l'air, et un second ensemble incluant un radiateur 26 et une résistance thermique 27 pour réchauffer l'air.

Comme visible dans la figure 4, le filtre 24 et l'évaporateur 25 sont deux éléments parallélépipédiques sensiblement accolés l'un à l'autre. Le radiateur 26 et la résistance thermique 27 sont aussi des éléments parallélépipédiques sensiblement accolés l'un à l'autre. L'évaporateur 25 est relié à un circuit froid du véhicule par l'intermédiaire de la première bride 6, et le radiateur 26 est relié à un circuit chaud par l'intermédiaire de la seconde bride 7.

L'évaporateur 25 est orienté selon un premier plan longitudinal P1 et le radiateur 26 est orienté selon un second plan longitudinal P2, ces deux plans longitudinaux étant disposés en Vé l'un par rapport à l'autre. Ces plans P1 et P2 qui sont tous deux parallèles à l'axe longitudinal AX du ventilateur 14 forment l'un avec l'autre un angle ouvert vers le haut valant environ soixante degrés.

L'évaporateur 25 est monté sous le ventilateur 14 qui est situé dans la partie supérieure droite du dispositif. Cet évaporateur 25 est orienté selon le plan longitudinal P1 qui est incliné à environ quinze degrés par rapport à un plan longitudinal vertical, et le filtre à air 24 s'étend parallèlement à l'évaporateur 25 en étant situé entre cet évaporateur 25 et le flanc inférieur droit FLD.

Le radiateur 26 est quant à lui situé dans la région inférieure gauche du dispositif, c'est-à-dire déporté latéralement par rapport au ventilateur 14 dont il est espacé, et il s'étend selon le plan P2 qui est incliné d'environ quarante-cinq degrés par rapport à un plan longitudinal vertical. La résistance thermique 27 s'étend le long du radiateur 26 en étant située entre ce radiateur et l'évaporateur 25.

Comme visible dans la figure 4, le radiateur 26 est séparé transversalement de l'évaporateur 25, par un espace Es qui permet à de l'air de descendre entre ces éléments afin de traverser ensuite le radiateur 26 en suivant une trajectoire remontant.

En fonctionnement, l'air acheminé par le divergeant 23 traverse en premier lieu le filtre 24 avant de traverser l'évaporateur 25. Lorsque cet air doit uniquement être refroidi, l'évaporateur est alimenté en fluide de refroidissement, et l'air est ensuite directement dirigé vers la partie supérieure du carter 2 pour être ensuite distribué dans l'habitacle via les sorties d'air du carter.

Lorsque l'air doit être réchauffé, il est canalisé vers le bas du carter 2 après avoir traversé l'évaporateur 25. Cet air contourne alors le bord inférieur du radiateur 26 en passant dans l'espace Es séparant transversalement ce bord inférieur de l'évaporateur 25 pour ensuite remonter afin de traverser successivement le radiateur 26 et la résistance thermique 27. Cet air est ensuite dirigé vers la partie supérieure du carter 2 pour être refoulé par les sorties d'air du dispositif.

Dans la partie inférieure du carter 2, l'air est dirigé par des volets orientables 29, 30 montés côte à côte sur un même axe longitudinal en étant placés dans le Vé que délimitent l'évaporateur 25 et le radiateur 26. Ces volets 29, 30 sont des volets de type papillon : chacun d'eux se présente sous forme d'une paroi plane à contour sensiblement rectangulaire qui tourne autour d'un axe longitudinal situé à mi-hauteur de cette paroi, c'est-à-dire la partageant en deux parties égales.

Chaque volet 29, 30 a une hauteur qui correspond sensiblement à la moitié de celle de l'évaporateur, et il est monté en vis-à-vis de la moitié supérieure de l'évaporateur. Chaque volet peut occuper une première position, dite froide, dans laquelle il est orienté à peu près parallèlement au radiateur 26 pour former avec l'évaporateur 25 un angle ouvert vers le haut. Dans cette position froide, l'air ayant traversé la moitié supérieure de l'évaporateur 25 est dirigé par la face interne de ce volet vers la partie haute du carter, et l'air ayant traversé la partie inférieure de l'évaporateur 25 monte naturellement vers la partie haute du carter du fait que cela correspond à une trajectoire de moindre perte de charge.

Chaque volet 29, 30 peut être placé dans une seconde position, dite chaude, dans laquelle il forme avec l'évaporateur 25 un angle qui est au contraire ouvert vers le bas. Dans cette seconde position, le volet forme une écope qui oriente vers le bas tout l'air ayant traversé la partie supérieure de l'évaporateur, pour le diriger vers l'espace Es situé entre le bord inférieur du radiateur 26 et l'évaporateur 25. Par voie de conséquence, l'air ayant traversé la moitié inférieure de l'évaporateur est lui aussi emprisonné entre le radiateur et le flux dévié par le volet, de sorte qu'il est acheminé lui aussi vers l'espace Es situé entre le bord inférieur du radiateur 26 et l'évaporateur 25.

Complémentairement, comme visible dans la figure 4, le dispositif comporte également une écope fixe supérieure 31 et une écope fixe inférieure 32 pour améliorer l'efficacité des volets occupant la seconde position. L'écope supérieure 31 est une paroi inclinée ayant un bord longeant la portion supérieure de la face aval de l'évaporateur 25 et son bord inférieur espacé de cette face aval, les bords supérieurs des volets venant en appui sur le bord inférieur de cette écope supérieure 31 lorsqu'ils sont dans la seconde position.

L'écope inférieure 32 a également une forme de paroi plane généralement rectangulaire comportant un bord supérieur sur lequel vient en appui le bord inférieur des volets 29 et 30 occupant la seconde position. Le bord inférieur de cette écope inférieure 32 longe le bord inférieur de la face supérieure du radiateur 26.

Ainsi, comme visible dans la figure 4, lorsque les volets occupent la seconde position, l'écope supérieure 31 prolonge la moitié supérieure de ces volets, et l'écope inférieure 32 prolonge leur moitié inférieure de sorte que ces éléments forment alors conjointement une paroi sensiblement étanche qui s'étend sur toute la hauteur de l'évaporateur pour diriger l'air l'ayant traversé vers l'espace Es.

Dans cette seconde position dite chaude des volets, la totalité de l'air ayant traversé l'évaporateur 25 est acheminée vers la région inférieure gauche du carter via l'espace Es. Cet air traverse ensuite l'espace situé entre le flanc inférieur gauche FLG du carter 2 et le radiateur 26, pour se diriger ensuite vers la partie supérieure du carter 2 en traversant le radiateur 26 et la résistance thermique 27 pour être réchauffé.

Les volets 29, 30 peuvent aussi être placés dans toute position intermédiaire pour notamment réguler la température de l'air conditionné par le dispositif à une valeur souhaitée.

Le montage de deux volets 29 et 30 autour d'un même axe permet comme on l'aura compris de formé un premier flux d'air situé dans la moitié avant du dispositif et un deuxième flux d'air situé dans la moitié arrière du dispositif, ces flux d'air ayant des températures différentes lorsque les volets 29 et 30 ont des orientations différentes.

Le premier et le second flux d'air sont alors ensuite déviés et canalisés avant d'atteindre les différentes sorties d'air du dispositif, pour être diffusés dans la partie droite et dans la partie gauche de l'habitacle, de manière à assurer un conditionnement d'air de dit bizone.

Il est également possible de monter dans le dispositif selon l'invention non pas deux volets, mais un seul volet, de manière à réaliser un conditionnement d'air à température unique pour l'ensemble de l'habitacle.

Après avoir été refroidi et/ou réchauffé, l'air atteint la partie supérieure du carter 2 pour être distribué dans l'habitacle par les sorties d'air qui sont situées en partie supérieure et arrière du carter, comme visible dans la figure 5. Plus particulièrement, la partie du carter 2 située à gauche du ventilateur 14, et qui s'étend depuis la partie basse du carter 2 jusqu'à sa face supérieure constitue une colonne de distribution repérée par 35.

Le carter 2 comporte ainsi au niveau de la partie supérieure de la colonne 35 deux sorties hautes 33 et 34 orientées vers la face interne du pare-brise et vers la partie haute de l'habitacle. Il comporte également une sortie arrière 36 ainsi que deux sorties latérales 37 et 38 pour distribuer l'air vers les parties gauche et droite de l'habitacle, ainsi qu'une sortie basse 39, ces dernières sorties étant situées au niveau de la partie arrière supérieure de la colonne de distribution 35 du carter.

L'air est réparti depuis la partie haute de la colonne 35 vers ces différentes sorties par des moyens de répartition à volets et obturateurs situés en partie haute de la colonne 35 et non décrits ici.

Comme visible clairement notamment dans la figure 4, la disposition de l'évaporateur 25 et du radiateur 26 en V et espacés l'un de l'autre, permet de réduire significativement l'encombrement transversal de la partie inférieure du dispositif tout en autorisant une circulation d'air permettant au choix son rafraîchissement ou son réchauffement.

Cette disposition offre en outre au dispositif une forme globalement symétrique par rapport à un plan longitudinal vertical, de sorte que le même dispositif est montable sans modification aussi bien sur un véhicule à conduite à droite que sur un véhicule à conduite à gauche.

Selon cette configuration, les volets 29 et 30 sont placés au plus près des échangeurs, ce qui améliore le mélange d'air en réalisant ce mélange à une distance maximale des sorties du dispositif, soit une distance suffisamment grande pour assurer un mélange très homogène.

Le réchauffement de l'air est assuré par le radiateur 26 dans lequel circule de l'eau chaude lorsque le moteur thermique du véhicule est suffisamment chaud. Et ce réchauffement est assuré par la résistance thermique 27 lorsque le moteur thermique n'est pas en mesure d'alimenter le radiateur 26 avec de l'eau suffisamment chaude.

Le dispositif de conditionnement est destiné à être monté dans la région centrale de la planche de bord du véhicule, de sorte qu'il est situé au droit du tunnel de la caisse porteuse du véhicule. Ce tunnel qui est représenté dans la figure 4 en y étant repéré par 28, et qui est présent dans la majorité des véhicules, est une ondulation centrale du plancher s'étendant tout le long de l'habitacle et qui constitue une séparation entre la partie droite et la partie gauche du plancher.

Ce tunnel 28 reçoit typiquement différents éléments mécaniques tels qu'une tringlerie de changement de vitesse, une tubulure d'échappement ou encore un arbre de transmission montés sous la caisse en étant placés dans la concavité que le tunnel y forme.

Comme visible dans les figures 4 et 5, le filtre à air est orienté longitudinalement le long du flanc droit FLD du carter 2, pour faciliter significativement l'accès à ce filtre pour le retirer. Comme ce filtre 24 s'étend perpendiculairement au tablier du véhicule en étant presque vertical et situé à faible distance du flanc FLD du carter 2, le retrait hors du carter 2 de ce filtre 24 peut être obtenu en le faisant coulisser vers le bas, ce carter 2 étant espacé du plancher du véhicule.

A cet effet, la partie inférieure droite du carter 2 est pourvue d'une trappe 41 située sous le bord inférieur du filtre 24, et qui est agencée pour s'ouvrir en pivotant autour d'un axe longitudinal, comme indiqué par la flèche F, de manière à donner accès au filtre à air 24. Cette trappe 41 est située au niveau de la jonction entre le flanc latéral droit FLD et le fond FD du carter qui sont séparés l'un de l'autre par une ouverture de passage du filtre 24 qui est fermée par cette trappe 41.

Cette trappe présente une section transversale ayant la forme de la lettre L, de sorte qu'elle comporte une portion prolongeant le fond FD et une portion prolongeant le flanc latéral droit FLD. Elle s'ouvre en pivotant autour d'un axe longeant son bord inférieur, de sorte qu'elle reste ouverte sous l'effet de la gravité. La longueur de cette trappe est sensiblement supérieure à celle du filtre 24.

De par sa section en L, cette trappe permet de libérer une ouverture ayant une étendue importante horizontalement dans le fond FD latéralement dans le flanc latéral FLD, ce qui permet de saisir le bas du filtre 24 pour le faire coulisser verticalement tout en autorisant son basculement latéral pour l'extraire sans interférer ni avec des pédales situées dans sa proximité latérale immédiate, ni avec le tunnel 28 situé dans son voisinage inférieur.

Comme visible dans les figures, cette trappe a une forme générale creuse pour être rapportée directement en face externe du corps de carter 2, tout en se bloquant sur celui-ci en position fermée simplement par encliquetage.

Le dispositif 1 est ainsi adapté à être monté aussi bien dans un véhicule à conduite à gauche que dans un véhicule à conduite à droite, car le filtre peut être retiré malgré la présence de pédales dans son voisinage immédiat.

Comme indiqué plus haut, l'air ayant traversé l'évaporateur 25 et éventuellement le radiateur 26 est ensuite dirigé vers la partie supérieure du carter pour être distribué dans les différentes sorties d'air du dispositif, en étant orienté vers ces sorties par plusieurs volets et obturateurs non détaillés.

Le dispositif comporte une cloison interne de forme gauche pour séparer le flux d'air issu de l'évaporateur et éventuellement du radiateur en un flux d'air gauche et un flux d'air droit de manière à conditionner l'air à des températures différentes pour la partie droite et pour la partie gauche de l'habitacle.

Cette cloison 42 s'étend dans une région médiane de la colonne 35 du carter 2, cette région médiane étant située à mi-hauteur entre la région inférieure renfermant l'évaporateur et le radiateur, et la partie supérieure de la colonne comportant ses sorties d'air hautes 33 et 34.

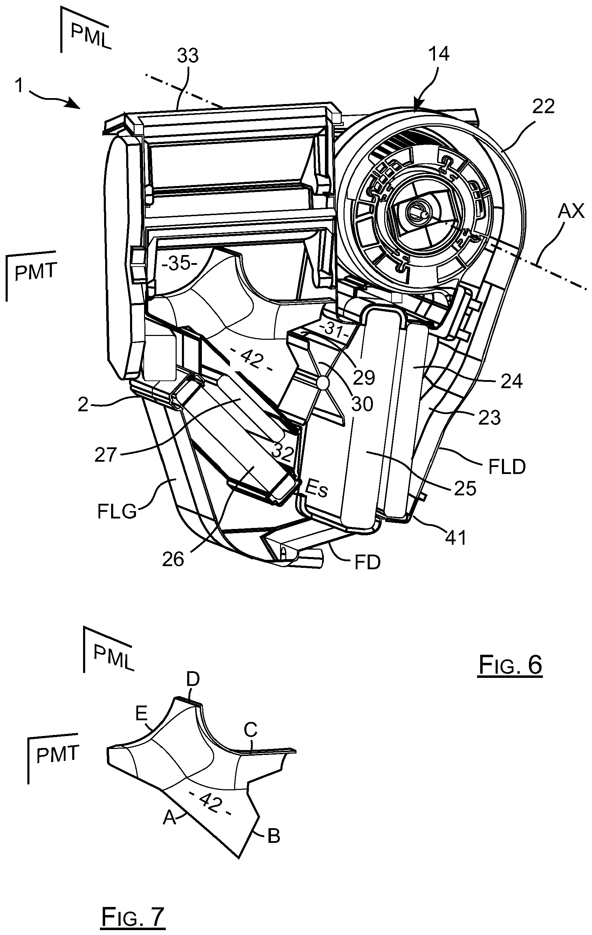

Comme visible dans la figure 6, cette cloison 42 de forme gauche comporte cinq bords principaux qui apparaissent qui sont repérés par A, B, C, D et E dans la figure 7.

Le bord A a une forme principalement rectiligne, et il est situé au-dessus de l'ensemble formé par le radiateur 26 et la résistance thermique 27 en étant inscrit principalement dans un plan médian transversal vertical PMT, situé à mi-distance entre la paroi avant et la paroi arrière du carter 2 au niveau de la colonne 35.

Ce bord A sépare ainsi le flux d'air ayant traversé le radiateur 26 et la résistance 27 en deux flux de même intensité, l'un s'écoulant verticalement en avant de ce bord A, et l'autre s'écoulant verticalement dans la région située en arrière de ce bord A, lorsque le système est installé dans sa position de service dans le véhicule.

Ce bord inférieur A est prolongé par un bord vertical B qui forme avec lui un angle de l'ordre de l'ordre de 90°, et qui s'étend lui aussi dans le plan transversal médian PMT, mais qui longe la zone de mélange située en aval l'évaporateur. Cette zone de mélange comporte ici le volet avant 29 et le volet arrière 30. Le bord vertical B se prolonge au-dessus des volets 29 et 30 où il se courbe vers l'arrière pour rejoindre la paroi arrière de la colonne 35 du carter 2.

Comme indiqué plus haut, les deux volets 29 et 30 sont deux volets papillon qui pivotent autour d'un même axe longitudinal en étant situés de part et d'autre du plan médian PMT.

Le bord vertical B est ensuite prolongé par un bord supérieur arrière C qui s'étend transversalement le long de la face interne de la paroi arrière de la colonne 35 du carter 2, jusqu'à une région centrale de celle-ci dans laquelle il remonte en décrivant une portion arquée.

Ce bord supérieur arrière C est ensuite prolongé par un bord supérieur longitudinal D qui s'étend selon la direction longitudinale AX depuis la paroi arrière jusqu'à la paroi avant de la colonne 35 de manière rectiligne. Ce bord longitudinal est inscrit dans un plan médian longitudinal vertical PML qui sépare la colonne 35 en une moitié gauche et une moitié droite de mêmes volumes.

Ce bord supérieur longitudinal D est ensuite prolongé par un bord supérieur avant E qui longe la face interne de la paroi avant de la colonne 35 en s'éloignant du volet selon une forme arquée descendante, pour rejoindre ensuite l'extrémité haute du bord inférieur A.

La cloison 42 comporte ainsi deux bords inférieurs A et B qui longent respectivement la région aval du radiateur et la zone de mélange en aval de l'évaporateur, et qui sont inscrits dans le plan médian transversal PMT, et elle comporte également un bord supérieur longitudinal D situé à distance au-dessus des bords A et B et qui s'étend selon une direction normale à celle du plan médian transversal PMT. Les bords transversaux avant et arrière E et C longent la paroi avant et la paroi arrière de la colonne 35 en raccordant le bord longitudinal au bord A et au bord B, respectivement. La cloison 42 a une forme comportant des galbes appropriés pour réunir ces cinq bords de base.

Comme on le comprend, cette cloison a une forme générale de quart de tour de torsade, en constituant une paroi gauche s'étendant entre ses bords inférieurs A et B correspondant à sa portion inférieure inscrite dans le plan médian transversal PMT, et sa portion supérieure terminée par son bord longitudinal D s'étendant dans le plan médian longitudinal PML. Ainsi, la portion supérieure et la portion inférieure sont orientées à angle droit lorsque vues selon un axe vertical correspondant par exemple à l'intersection des plans PMT et PML.

Ainsi, grâce à cette cloison 42, l'air traversant verticalement le radiateur 26 est séparé en un flux situé en avant de la cloison 42 et un flux situé en arrière de cette cloison lorsqu'il a passé le radiateur. Le flux situé en avant de la cloison est dirigé par celle-ci vers la moitié droite de la portion supérieure de la colonne 35 du carter 2. Le flux situé en arrière de cette cloison 42 est quant à lui dirigé par cette cloison 42 vers la moitié gauche de la partie supérieure de la colonne 35 du carter 2.

De la même manière, cette cloison 42 sépare également le flux d'air ayant traversé l'évaporateur 25 en un flux gauche et un flux droit : le flux d'air situé en avant de la cloison 42 est dirigé par celle-ci vers la moitié droite de la partie supérieure de la colonne 35, et le flux situé en arrière de cette cloison, par rapport au sens d'avancement du véhicule, est dirigé vers la moitié gauche de cette partie supérieure.

L'inclinaison du volet 29 entre sa première position et sa seconde position permet d'ajuster la température de l'air diffusé via la moitié droite de la partie supérieure de la colonne 35. De la même façon, l'inclinaison du volet arrière 30 permet d'ajuster, de manière indépendante, la température de l'air diffusé via la moitié gauche de la partie supérieure de la colonne 35.

### Nomenclature

- 1: dispositif de conditionnement d'air
- 2: carter
- 3: organe d'admission d'air et d'accouplement
- 4: bouche d'admission d'air
- 6: première bride d'accouplement
- 7: seconde bride d'accouplement
- 8: moitié supérieure
- 9: encadrement
- 11: moitié inférieure
- 12: platine
- 13: autre platine
- 14: ventilateur centrifuge à volute
- 16: entrée d'air
- 17: tambour
- 18: fond
- 19: flanc cylindrique
- 21: face d'aspiration
- 22: forme de volute
- 23: divergeant
- 24: filtre à air
- 25: évaporateur
- 26: radiateur
- 27: résistance thermique
- 28: tunnel
- 29: volet papillon avant
- 30: volet papillon arrière
- 31: écope supérieure fixe
- 32: écope inférieure fixe
- 33: sortie haute
- 34: sortie haute
- 35: colonne de distribution
- 36: sortie arrière
- 37: sortie latérale
- 38: sortie latérale
- 39: sortie basse
- 41: trappe
- 42: cloison
- A: bord inférieur
- B: bord vertical
- C: bord supérieur arrière
- D: bord supérieur longitudinal
- E: bord supérieur avant
- Es: espace
- F: flèche
- AX: axe longitudinal
- FD: fond
- FLD: flanc droit
- FLG: flanc inférieur gauche
- P1: plan longitudinal de l'évaporateur
- P2: plan longitudinal du radiateur
- PMT: plan médian transversal
- PML: plan médian longitudinal

## Revendications

1. Dispositif de conditionnement d'air (1) destiné à équiper un habitacle de véhicule automobile comportant un tablier transversal avant en étant monté selon une position de service dans laquelle il est adossé à une région centrale de ce tablier, ce dispositif (1) comportant un carter (2) ayant au moins une entrée d'air (16) située en partie haute de ce carter (2) installé en position de service, ce carter (2) renfermant un ventilateur (14) centrifuge à tambour (17) pour aspirer de l'air admis par l'entrée d'air (16) et le refouler par une sortie d'air (33-34, 36-39), dans lequel le carter (2) délimite autour du tambour (17) une volute (22) collectant l'air centrifugé par ce tambour (17) pour le diriger vers une partie inférieure du carter (2), ledit carter (2) renfermant dans sa partie inférieure en position de service un évaporateur (25) et/ou un radiateur (26), ainsi qu'un volet de mixage avant (29) et un volet de mixage arrière (30) agencés pour établir deux flux d'air ayant des températures différentes, ces deux flux d'air remontant dans une colonne de distribution (35) du dispositif pour être distribués vers une région gauche et vers une région droite de l'habitacle, ce dispositif comportant une paroi (42) de séparation s'étendant dans la colonne (35), ledit dispositif étant **caractérisé en ce que** cette paroi (42) a une forme gauche se rapprochant d'un quart de tour de torsade, comportant une portion inférieure s'étendant au dessus du radiateur (26) et de l'évaporateur (25) en étant inscrite dans un plan médian transversal (PMT) séparant la colonne (35) en une moitié avant et une moitié arrière lorsque le dispositif est dans sa position de service, de manière à constituer un flux d'air avant et un flux d'air arrière, et une portion supérieure terminée par un bord supérieur longitudinal (D) s'étendant selon un plan médian longitudinal (PML) qui sépare la colonne en une première moitié latérale et une deuxième moitié latérale lorsque le dispositif est en service, de manière à canaliser le flux d'air avant vers l'une des moitiés latérales de la colonne (35), et le flux d'air arrière vers l'autre moitié latérale de la colonne (35).

2. Dispositif selon la revendication 1, dans lequel la paroi de séparation (42) comporte deux bords inférieurs transversaux (A, B) inscrits dans le plan médian transversal (PMT), ainsi que deux bords supérieurs transversaux (C, E) raccordant chacun une extrémité du bord supérieur longitudinal (D) à un bord inférieur transversal (A, B) en longeant respectivement la paroi avant et la paroi arrière de la colonne (35).

## Patentansprüche

1. Klimatisierungsvorrichtung (1), die zur Ausstattung eines Innenraums eines Kraftfahrzeugs bestimmt ist, das eine querliegende vordere Spritzwand aufweist, indem sie gemäß einer Betriebsposition montiert wird, in der sie sich gegen einen zentralen Bereich dieser Spritzwand anlehnt, wobei diese Vorrichtung (1) ein Gehäuse (2) aufweist, das mindestens einen Lufteingang (16) hat, der sich im oberen Teil dieses in der Betriebsstellung eingebauten Gehäuses (2) befindet, wobei dieses Gehäuse (2) einen Zentrifugalventilator (14) mit Trommel (17) umschließt, um durch den Lufteingang (16) eingelassene Luft anzusaugen und sie durch einen Luftausgang (33-34, 36-39) zu fördern, wobei das Gehäuse (2) um die Trommel (17) herum eine Spirale (22) begrenzt, die die von dieser Trommel (17) zentrifugierte Luft sammelt, um sie zu einem unteren Teil des Gehäuses (2) zu lenken, wobei das Gehäuse (2) in seinem unteren Teil in der Betriebsstellung einen Verdampfer (25) und/oder einen Radiator (26) sowie eine vordere Mischklappe (29) und eine hintere Mischklappe (30) umschließt, die eingerichtet sind, um zwei Luftströme aufzubauen, die unterschiedliche Temperaturen haben, wobei diese zwei Luftströme in einer Verteilungssäule (35) der Vorrichtung hochsteigen, um zu einem linken Bereich und einem rechten Bereich des Innenraums verteilt zu werden, wobei diese Vorrichtung eine Trennwand (42) aufweist, die sich in der Säule (35) erstreckt, wobei die Vorrichtung **dadurch gekennzeichnet ist, dass** diese Wand (42) eine verzogene Form hat, die sich einer Verdrillungsvierteldrehung annähert, die einen unteren Abschnitt, der sich über dem Radiator (26) und dem Verdampfer (25) erstreckt, indem er in einer Quermittelebene (PMT) liegt, die die Säule (35) in eine vordere Hälfte und eine hintere Hälfte trennt, wenn die Vorrichtung in ihrer Betriebsstellung ist, um einen vorderen Luftstrom und einen hinteren Luftstrom zu bilden, und einen oberen Abschnitt aufweist, der in einem oberen Längsrand (D) endet, der sich gemäß einer Längsmittelebene (PML) erstreckt, die die Säule in eine erste seitliche Hälfte und eine zweite seitliche Hälfte trennt, wenn die Vorrichtung in Betrieb ist, um den vorderen Luftstrom zu einer der seitlichen Hälften der Säule (35) und den hinteren Luftstrom zur anderen seitlichen Hälfte der Säule (35) zu leiten.

2. Vorrichtung nach Anspruch 1, wobei die Trennwand (42) zwei untere Querränder (A, B), die in der Quermittelebene (PMT) liegen, sowie zwei obere Querränder (C, E) aufweist, die je ein Ende des oberen Längsrands (D) mit einem unteren Querrand (A, B) verbinden, indem sie entlang der vorderen Wand bzw. der hinteren Wand der Säule (35) verlaufen.

## Claims

1. Air conditioning device (1) intended to equip an interior of a motor vehicle comprising a front transverse bulkhead by being mounted in a service position in which it is up against a central region of this bulkhead, this device (1) comprising a housing (2) having at least one air inlet (16) situated in the top part of this housing (2) installed in a service position, this housing (2) containing a rotary barrel (17) blower (14) to draw in the air admitted via the air inlet (16) and deliver it via an air outlet (33-34, 36-39), in which the housing (2) delimits, around the barrel (17), a blower housing (22) collecting the air blown by this barrel (17) to direct it toward a lower part of the housing (2), said housing (2) containing, in its lower part in the service position, an evaporator (25) and/or a heater (26) as well as a front mixing flap (29) and a rear mixing flap (30) which are arranged in such a way as to establish two air flows having different temperatures, these two air flows rising up a distribution column (35) of the device to be distributed to a left-hand region and to a righthand region of the vehicle interior, this device comprising a dividing wall (42) extending in the column (35), said device being **characterized in that** this wall (42) has a skewed shape similar to a quarter of a turn of a twist, comprising a lower portion extending above the heater (26) and the evaporator (25) being inscribed in a transverse midplane (PMT) dividing the column (35) into a front half and a rear half when the device is in its service position, so as to constitute a front air flow and a rear air flow, and an upper portion ending in a longitudinal upper edge (D) extending in a longitudinal midplane (PML) which divides the column into a first lateral half and a second lateral half when the device is in service, so as to direct the front air flow toward one of the lateral halves of the column (35) and the rear air flow toward the other lateral half of the column (35).

2. Device according to Claim 1, in which the dividing wall (42) comprises two transverse lower edges (A, B) inscribed in the transverse midplane (PMT), and two transverse upper edges (C, E) each connecting one end of the longitudinal upper edge (D) to a transverse lower edge (A, B), running respectively along the front wall and the rear wall of the column (35).
